# EUROPEAN PATENT APPLICATION

(11) **EP 4 644 760 A1**
(43) Date of publication of application: **05.11.2025**
(21) Application number: 24898171.4
(22) Date of filing: 28.11.2024
(51) Int. Cl.: F17C 5/02, F17D 1/02, F16L 53/35, H05B 6/06

(54) **HEAT TRACING MONITORING SYSTEM AND HEAT TRACING MONITORING METHOD**

(30) Priority: 30.11.2023 KR 20230170654
(71) Applicant: Innocreative System Co., Ltd, Ansan-si, Gyeonggi-do 15434 (KR)
(72) Inventor: KIM, Sang Uk, Gwangmyeong-si, Gyeonggi-do 14238 (KR)
(74) Representative: Pereira da Cruz, Joao
(86) International application number: PCT/KR2024/019199
(87) International publication number: WO 2025/116577

(57) **Abstract**

The present invention discloses a monitoring system including: a sensor installed on a pipe that connects a fluid demand end and a fluid supply end and configured to collect sensing information; a receiving unit connected to the sensor and configured to collect sensing information from the sensor; a controller configured to output a temperature value of a fluid using the sensing information through calibration; a heating cable installed on the pipe and configured to heat the pipe based on the temperature value of the fluid; a human-machine interface (HMI) module configured to display the temperature value of the fluid and a change in the temperature value of the fluid caused by heating, by using a graphical model of a piping system including a plurality of pipes; and a display configured to output the graphical model. According to the present invention, temperature control of a fluid is possible by using a heating cable through monitoring of heat tracing based on an optical fiber sensor.

## Description

### Technical Field

The present invention relates to a monitoring system and monitoring method for heat tracing, and more particularly, to a system for controlling heat tracing of a long-distance pipe and monitoring temperature changes, and a monitoring method using the same.

### Background Art

Heat tracing refers to maintaining the temperature of a fluid inside a tank or pipe at a constant level by exchanging heat equivalent to the heat loss that occurs through insulation. Such heat tracing is applied to prevent freezing of tanks or pipes or to maintain the temperature of the fluid.

There are two representative types of heat tracing: fluid circulation tracing and electric heat tracing. Among fluid circulation methods, steam tracing is widely used; however, it has the drawback of high installation and maintenance costs for the tracing system. In contrast, electric heat tracing uses heating cables, allowing optimal heating cable types to be selected for each application area, and it offers the advantages of lower operational cost, as well as ease in system design and control.

A complete heat tracing system requires components beyond the heating cables. In addition to the heating cables, required components include power connection and branching junction devices, as well as end treatment devices.

Self-regulating heating cables, which automatically adjust output based on ambient temperature, use a polymer composite material with positive temperature coefficient (PTC) characteristics as a heating element. This polymer composite material is formed by adding carbon black, which imparts electrical conductivity, to a polymer resin. The composite material constituting the heating element forms conductive paths that allow current to flow between bus wires arranged parallel to the length of the cable.

The number of conductive paths between the bus wires in a self-regulating heating cable varies depending on temperature. When the temperature around the cable drops, the heating element contracts microscopically, forming more conductive paths between the bus wires and thereby reducing resistance. Conversely, as the temperature rises, the heating element expands, reducing the number of conductive paths and increasing resistance. This phenomenon, known as the positive temperature coefficient (PTC) effect, forms the basis of operation for self-regulating heating cables.

When current flows through the conductive paths of the heating element, Joule heat is generated, raising the temperature of the heating element. As the temperature increases, the heating element expands microscopically, which increases electrical resistance and automatically reduces the output of the heating cable.

On the other hand, despite the advantages of PTC elements, when used in heat tracing systems, the self-regulating principle may limit heating above a certain temperature, and slow thermal response may be a disadvantage.

As a temperature measurement technique for gases, Korean Patent Publication No. 10-2022-0163264 discloses an invention related to a semiconductor manufacturing apparatus and a temperature control method. The disclosed temperature sensor has a temperature measuring unit positioned inside the inner wall of a gas introduction pipe, which distinguishes it from the configuration of the present invention, in which the temperature sensor is installed on the surface of the pipe.

### Detailed Description of the Invention

### Technical problem

An objective of the present invention is to provide a monitoring method and a monitoring system for heat tracing, which monitor heat tracing of a long-distance pipe using an optical fiber sensor and a heating cable that are separately arranged.

Another objective of the present invention is to provide a system and method for monitoring a temperature value of a fluid in heat tracing by calibrating a temperature value of a pipe.

Another objective of the present invention is to provide a monitoring method and a monitoring system for heat tracing of a long-distance pipe, which have temperature measurement and temperature control functions.

### Solution to Problem

According to an aspect of the present invention, there is provided a monitoring system for heat tracing, including a heat tracing monitoring device configured to receive a temperature value of a pipe from a temperature measuring device, and to output a temperature value of a fluid flowing through the pipe by using the temperature value of the pipe through calibration; the temperature measuring device configured to output and transmit the temperature value of the pipe by using a temperature sensor installed on the pipe that connects a fluid supply end, which supplies the fluid, and a fluid demand end, which uses the fluid; and a heat tracing device provided with a heating cable installed on the pipe, and configured to heat the pipe using the heating cable, wherein the heat tracing monitoring device is further configured to control operation of the heat tracing device based on the temperature value of the fluid, and to display the temperature value of the pipe, the temperature value of the fluid, and a change in the temperature value of the fluid heated by the heat tracing device by using a graphical model of a piping system including a plurality of pipes.

In addition, the monitoring system for heat tracing may be configured such that the heat tracing monitoring device includes a human-machine interface (HMI) module configured to display the temperature value of the fluid and the change in the temperature value of the fluid caused by heating, by using the graphical model of the piping system including the plurality of pipes; and a display configured to output the graphical model.

Additionally, the monitoring system for heat tracing may be configured such that the temperature sensor includes an optical fiber sensor.

In addition, the monitoring system for heat tracing may be configured such that the temperature measuring device is configured to output the temperature value of the pipe and position information regarding a temperature measuring point of the pipe using sensing information received from the optical fiber sensor.

In addition, the monitoring system for heat tracing may be configured such that the optical fiber sensor is based on a Raman optical time-domain reflectometer (ROTDR) and is configured to scatter incident laser light of a specific wavelength at predetermined positions and to output scattered light to be used for measuring the temperature and position of the pipe.

Also, the monitoring system for heat tracing may be configured such that the heat cable is installed in a sub-section within the entire section between the fluid supply end and the fluid demand end, parallel to the pipe in a longitudinal direction thereof, and in contact with the pipe.

Additionally, the monitoring system for heat tracing may be configured such that the temperature sensor is installed in the sub-section, parallel to the pipe in the longitudinal direction thereof and in contact with the pipe.

Additionally, the monitoring system for heat tracing may be configured such that the temperature sensor and the heating cable are installed to be maximally spaced apart from each other within the sub-section.

In addition, the monitoring system for heat tracing may be configured such that the temperature sensor and the heating cable are installed to intersect each other at a predetermined point between the sub-sections.

Additionally, the monitoring system for heat tracing may further include a programmable logic controller (PLC) connected to the heat tracing device, and the heat tracing monitoring device may be configured to control heating of the heating cable through the PLC.

According to another aspect of the present invention, there is provided a monitoring method for heat tracing, which is performed by a monitoring system for heat tracing, the monitoring method including constructing a graphical model of a piping system including at least one pipe; outputting a temperature value of the pipe and a temperature value of a fluid flowing through the pipe by using a temperature sensor installed on the pipe; and displaying at least one of the temperature value of the pipe or the temperature value of the fluid by using a graphical user interface (GUI) of the graphical model.

Additionally, the monitoring method for heat tracing may further include controlling operation of a heating cable installed in the pipe based on the temperature value of the fluid.

Additionally, the monitoring method for heat tracing may further include displaying in real time a change in the temperature value of the fluid heated by the heating cable.

In addition, in the monitoring method for heating tracing, the outputting of the temperature value of the fluid flowing through the pipe may include restoring fluid information, piping information, and environmental information; measuring a temperature value of the pipe using the temperature sensor; and calibrating the temperature value of the pipe using the temperature value of the pipe, the fluid information, the piping information, and the environmental information.

The details of other embodiments are incorporated in "Best Mode for Carrying out the Invention" and accompanying "Drawings".

The advantages and/or features of the present invention and a method of achieving the same will be apparently comprehended by referring to various embodiments described specifically hereinafter together with the accompanying drawings.

However, the following should be understood. The present invention is not limited to the configuration of each embodiment disclosed hereinafter but may also be implemented in various different forms. Each embodiment disclosed in this specification is provided to make the disclosure of the present invention complete, and to allow those skilled in the art to completely comprehend the scope of the present invention. The present invention is only defined within the scope of accompanying claims.

### Advantageous Effects of Invention

According to the present invention, it is possible to measure the temperature value of a pipe without error by using a temperature sensor installed separately from a heating cable.

In addition, temperature control of the fluid is possible using the heating cable installed separately from the optical fiber sensor.

Additionally, it is possible to monitor the temperature value of the fluid based on the temperature value of the pipe measured by using the optical fiber sensor.

Moreover, calibration of the temperature value of the pipe measured by the optical fiber sensor is possible using the specific heat, specific gravity, and latent heat of the fluid.

In addition, by using an optical fiber sensor and a heating cable that are installed separately on the pipe but intersect at certain points, it becomes to compare temperature values of the pipe measured in the separately installed sections and at the crossing points.

### Brief Description of Drawings

FIG. 1 is an exemplary diagram of a monitoring system for heat tracing according to an embodiment of the present invention.
FIG. 2 is an exemplary diagram illustrating the scattering of light incident on an optical fiber.
FIG. 3 is an exemplary diagram illustrating the types of light scattering.
FIG. 4 is a block diagram of a heat tracing monitoring device included in the monitoring system shown in FIG. 3.
FIG. 5 is an exemplary diagram of a heating cable included in the monitoring system shown in FIG. 3.
FIG. 6 is a circuit diagram of the heating cable shown in FIG. 3.
FIG. 7 is an exemplary diagram of a temperature sensor included in the monitoring system shown in FIG. 3.
FIG. 8 is a cross-sectional view of a pipe where the temperature sensor and the heating cable, which are included in the monitoring system of FIG. 3, are installed.
FIG. 9 is an exemplary diagram of the temperature sensor installed on the pipe shown in FIG. 8.
FIG. 10 is a flowchart illustrating a monitoring method for heat tracing according to an embodiment of the present invention.
FIG. 11 is a flowchart of S120 in FIG. 10.
FIG. 12 is an exemplary diagram of a graphical user interface (GUI) of a graphical model according to an embodiment of the present invention.
FIG. 13 is an exemplary diagram showing temperature changes at crossing points and sub-sections on a pipe where a temperature sensor and a heating cable are installed.

### Best Mode for Carrying out the Invention

Before describing the present invention in detail, terms and words used herein should not be construed as being unconditionally limited in a conventional or dictionary sense, and the inventor of the present invention can define and use concepts of various terms appropriately as needed in order to explain the present invention in the best way. Furthermore, it should be understood that these terms and words are to be construed in light of the meanings and concepts consistent with the technical idea of the present invention.

In other words, the terminology used herein is for the purpose of describing exemplary embodiments of the present invention, and is not intended to specifically limit the content of the present invention. It should be understood that these terms are defined terms in view of the various possibilities of the present invention.

Further, in this specification, the singular forms "a," "an," and "the" include plural referents unless the context clearly dictates otherwise. Also, it should be understood that the present invention can include a singular meaning even if it is similarly expressed in plural.

Where a component is referred to as "comprising" another component throughout this specification, unless specified otherwise, this means the component does not exclude any other element but may further include any other element.

Furthermore, when it is stated that an element is "inside or connected to another element," this element may be directly connected to another element or may be installed in contact with it. In addition, it may be installed spaced apart with a predetermined distance, and in the case where a component is installed to be spaced apart with a predetermined distance, a third component or means for fixing or connecting the component to another component may be present. Also, it should be noted that the description of the third component or means may be omitted.

On the other hand, it should be understood that there is no third component or means when an element is described as being "directly coupled" or "directly connected" to another element.

Likewise, other expressions that describe the relationship between the components, such as "between" and "right between," or "neighboring to" and "directly adjacent to" and such should be understood in the same spirit.

Further, in this specification, when terms such as "one surface," "other surface," "one side," "other side," "first," "second" and such are used, it is to clearly distinguish one component from another. It should be understood, however that the meaning of the component is not limited by such terms.

It is also to be understood that terms related to positions such as "top," "bottom," "left," "right," and the like in this specification are used to indicate relative positions in the drawings for the respective components. Further, unless an absolute position is specified for these positions, it should not be understood that these position-related terms refer to absolute positions.

In addition, in this specification, the same reference numerals are used for the respective constituent elements of the drawings, and the same constituent elements are denoted by the same reference numerals even if they are shown in different drawings, that is, the same reference numerals indicate the same components throughout this specification.

It is to be understood that the size, position, coupling relationships and such, of each component constituting the present invention in the accompanying drawings, may be partially exaggerated or reduced or omitted to be able to sufficiently clearly convey the scope of the invention or for convenience of describing, and therefore the proportion or scale thereof may not be rigorous.

Also, in the following description of the present invention, a detailed description of a configuration that is considered to unnecessarily obscure the gist of the present invention, for example, a known technology including the prior art, may be omitted.

Hereinafter, embodiments of the present invention will be described in detail with reference to the relevant drawings.

A monitoring system 10 for heat tracing according to an embodiment of the present invention may include a heat tracing monitoring device 100 that may control a function of monitoring a temperature of a fluid by using a human-machine interface (HMI), control a heating function of a long-distance pipe by using a heating cable, control alarm functions, such as alarm setting, activation, and deactivation during fluid temperature monitoring, and control training, testing, and operation of an artificial intelligence model that has been trained through learning of a dataset necessary for calibration of the temperature value of the pipe.

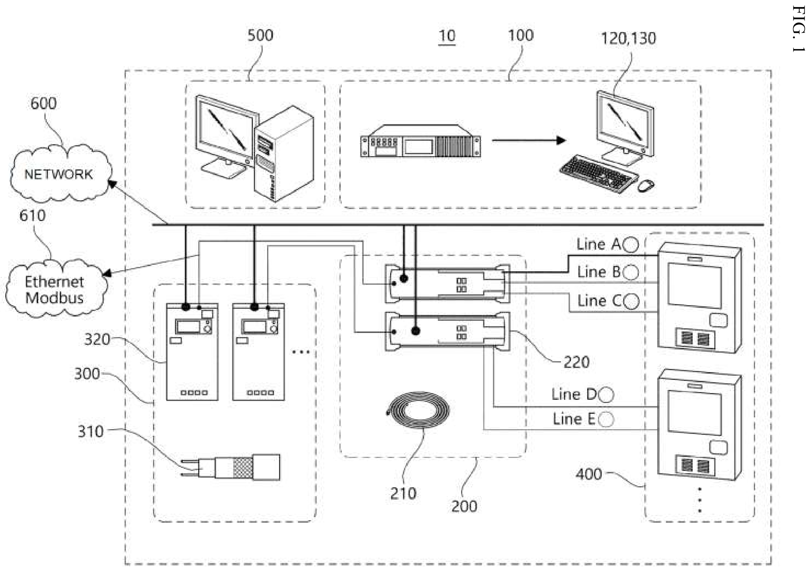

FIG. 1 is an exemplary diagram of a monitoring system for heat tracing according to an embodiment of the present invention.

Referring to FIG. 1, a monitoring system 10 for heat tracing may include a heat tracing monitoring device 100, a temperature measuring device 200, a heat tracing device 300, and a gas controller 400.

The heat tracing monitoring device 100 has a function of predicting the temperature value of the fluid based on the temperature value of the pipe and displaying the predicted temperature value to the user, and of controlling the heat tracing device 300 to maintain the temperature value of the fluid above a threshold value at which a phase change occurs.

The heat tracing monitoring device 100 may include an input device 120 and an output device 130. The heat tracing monitoring device 100 may be implemented using, for example, a computer. The heat tracing monitoring device 100 may be implemented as a single computer or as a set of computers, each performing the respective functions listed above.

The pipe has a function of transporting a fluid, for example, a special gas used in a semiconductor process. Lines A to E illustrated in FIG. 1 correspond to symbols for distinguishing channels that transport the special gas. One channel corresponds to one pipe, and a temperature sensor 210 and a heating cable 310 may be installed on the pipe.

The heat tracing monitoring device 100 may communicatively connected to the temperature measuring device 200 and the heat tracing device 300 via Ethernet.

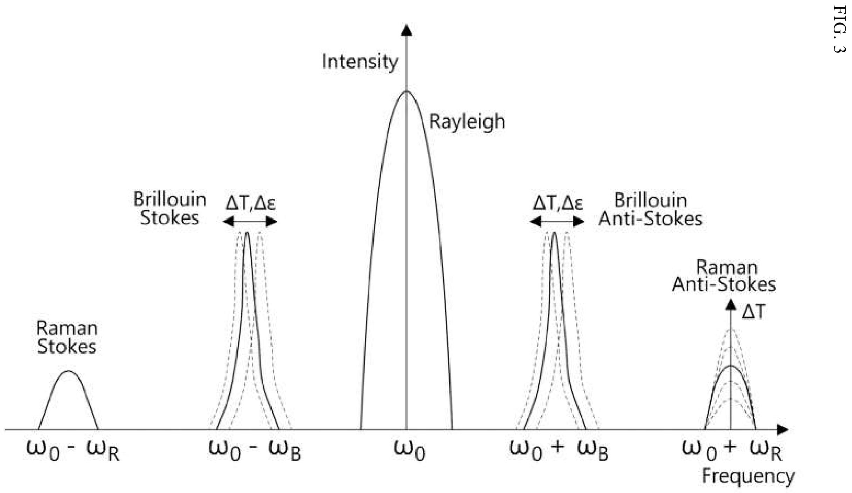

The temperature measuring device 200 has a function of measuring the temperature of the pipe by using the temperature sensor 210 installed on the pipe. The temperature sensor 210 may be installed on the pipe of a channel indicated as Line A to Line E, as illustrated in FIG. 3 by way of example.

The temperature measuring device 200 may include the temperature sensor 210 and a temperature sensor controller 220. The temperature sensor 210 has a function of transmitting laser light and receiving scattered light. The temperature sensor controller 220 may acquire temperature information of the pipe by analyzing the characteristics of the scattered light, specifically, a temperature value of the pipe and position information indicating the location where the temperature information of the pipe has been collected, that is, distance information regarding the separation distance between the temperature sensor controller 220 and the temperature measurement point.

The heat tracing device 300 has a function of maintaining the temperature of the fluid by using the heating cable 310 installed on the pipe of a channel indicated as Line A to Line E. The heat tracing device 300 may include the heating cable 310 and a heating cable controller 320.

The heating cable controller 320 may apply heat to the fluid by on/off control of the heating cable 310, thereby maintaining the temperature value of the fluid above a threshold at which a phase change occurs.

The heating cable controller 320 may be connected to the temperature sensor controller 220 to enable serial communication by using an Ethernet Modbus 610 protocol. Accordingly, the heating cable controller 320 may be automatically controlled based on the output of the temperature sensor controller 220. That is, the heating cable controller 320 may control the operation of the heating cable 310 based on the temperature value of the pipe collected by the temperature measuring device 200 or the temperature value of the fluid output by the heat tracing monitoring device 100.

The temperature sensor 210 and the heating cable 310 may be installed on a piping system, for example, on a plurality of long-distance pipes that transport a special gas used in semiconductor processes. The configuration of the temperature sensor 210 and the heating cable 310, and their installation on the pipes, will be described below.

The gas controller 400 has a function of controlling the flow of gas, which corresponds to the fluid flowing through the pipe, and of measuring the pressure of the gas. That is, the gas controller 400 may measure, for example, the pressure of gas flowing through the pipe by using a pressure sensor (not shown) installed on the pipe, and has a function of adjusting the amount of fluid by using a fluid control valve (not shown).

The gas controller 400 has a function of controlling various electronic valves installed on long-distance pipes. The gas controller 400 may be communicatively connected to the heat tracing monitoring device 100 via serial or Ethernet communication through a PLC or the like. That is, the gas controller 400 has a function of controlling the supply of gas delivered through the pipe, for example, a special gas used in semiconductor processes, by controlling electronic devices such as air valves and solenoid valves.

A user terminal 500, as a client having the heat tracing monitoring device 100 as a server, may be communicatively connected to the heat tracing monitoring device 100 through a network 600.

The user terminal 500 may be implemented in the form of a personal computer (PC) or a mobile terminal. A user may access the heat tracing monitoring device 100 through a web browser by using a PC or a personal mobile terminal.

The user may monitor the state of the pipe by using a display, which is the output device 130 connected to the heat tracing monitoring device 100, and the user terminal 500. The heat tracing device 300 may operate automatically by default, and additionally, the user may directly control the operation of the heat tracing device 300 through the heat tracing monitoring device 100 and the user terminal 500.

A plurality of long-distance pipes may be provided according to the type of gas. The temperature sensor 210, the heating cable 310, and the gas controller 400 may be installed on each pipe. That is, the temperature measuring device 200, the heat tracing device 300, and the gas controller 400 may be configured in plurality according to the number of pipes. For example, for NH₃ gas, Lines A to C may be provided, with the temperature measuring device 200 and the heat tracing device 300 assigned to each, and each line may form an independent channel. For CO₂ gas, Lines D and E may be provided, with the temperature measuring device 200 and the heat tracing device 300 assigned to each, and likewise, each line may form an independent channel.

The network 600 may be any suitable communication network, including wired and wireless networks such as serial communication, local area network (LAN), wide area network (WAN), Internet, intranet, and extranet, as well as mobile networks, for example, cellular, 3G, LTE, Wi-Fi networks, ad hoc networks, and combinations thereof.

The network 600 may include connections of network elements such as hubs, bridges, routers, switches, and gateways. The network 600 may include one or more connected networks, such as public networks including the Internet and private networks including secure enterprise private networks, for example a multi-network environment. Access to the network 600 may be provided through one or more wired or wireless access networks.

An optical fiber sensor functions as a sensor by the optical fiber itself, and has the advantages of not requiring a power supply and being capable of measurement without being affected by electromagnetic induction. Attempts to use optical fibers as sensors began in the 1970s, and many types of optical fiber sensors are currently in use.

In particular, distributed temperature measuring devices are generally referred to as distributed temperature sensors (DTS), and were commercialized and productized in the late 1980s. As devices using optical fiber sensors, they have a long history and are used in many industrial fields.

DTS is also referred to as a Raman optical time-domain reflectometer.

Raman scattered light is approximately three orders of magnitude weaker than Rayleigh scattered light, and thus, even when using a multimode optical fiber with high scattering efficiency, a high-output light source is essential. In long-distance measurements, lasers were initially used, but recently, methods using semiconductor lasers and optical fiber amplifiers (Erbium-doped fiber amplifiers) have become common.

When pulse light is incident on an optical fiber, the light pulse propagates through the optical fiber. As the light pulse propagates through the optical fiber, it is scattered and attenuated in very small amounts at various points within the fiber. Most of this scattered light is referred to as Rayleigh scattered light, which is generated by fluctuations in the microscopic refractive index within the optical fiber, and its wavelength is the same as that of the incident light.

Within the scattered light, energy exchange may occur with lattice vibrations of the silica molecules in the optical fiber, resulting in a slight shift in the wavelength of the incident light. This is referred to as Raman scattered light.

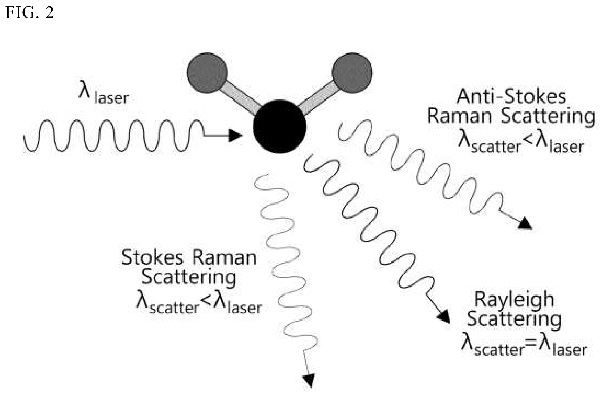

FIG. 2 is an exemplary diagram illustrating the scattering of light incident on an optical fiber.

Referring to FIG. 2, when laser light of a single wavelength (laser) collides with molecules, three types of scattering occur. These three types of scattering occur at different frequencies: Rayleigh scattering, which corresponds to scattering at the same wavelength as the incident light; anti-Stokes Raman scattering, which corresponds to scattering at a shorter wavelength than the incident light; and Stokes Raman scattering, which corresponds to scattering at a longer wavelength than the incident light.

FIG. 3 is an exemplary diagram illustrating the types of light scattering.

Referring to FIG. 3, the frequency ranges of Rayleigh scattering, Brillouin Stokes, Brillouin anti-Stokes, Raman Stokes, and Raman anti-Stokes scattering are illustrated.

Raman scattered light consists of two components. One is Stokes light, in which the light shifts to a longer wavelength after transferring energy to the lattice vibration, and the other is anti-Stokes light. In particular, the intensity of anti-Stokes light varies significantly depending on the temperature of the optical fiber at the location where scattering occurs. Therefore, by measuring the intensity of Raman scattered light, it is possible to obtain temperature information at the location where the Raman scattering occurs.

Most of the light scattered within the optical fiber is emitted outside the optical fiber, but a portion of it is reflected back inside and returns to the incident end. By measuring the time from when the pulse light is incident until the scattered light returns to the incident end, it is possible to determine the location where the scattered light was generated, since the propagation speed within the optical fiber is already known. By combining this location information with temperature information, the temperature distribution along the entire length of the optical fiber can be measured.

A temperature sensor 210 included in the monitoring system 10 for heat tracing according to an embodiment of the present invention may include an optical fiber sensor. The optical fiber sensor may be used for temperature measurement in electric heat tracing, in which thermal energy is utilized. The optical fiber sensor serves to output scattered light to be used for measuring the temperature and position of the pipe by scattering incident laser light of a specific wavelength at predetermined positions.

The material of the optical fiber sensor may be glass optical fiber or plastic optical fiber.

The temperature sensor 210 according to an embodiment of the present invention is characterized in that it includes an optical fiber that has a function of measuring temperature using Raman anti-Stokes light. In addition to monitoring the temperature of the fluid using the temperature sensor, heat tracing is required to apply heat to the pipe in order to raise the temperature of low-temperature fluid.

The temperature measuring device 200, as a distributed temperature sensor (DTS) for measuring the temperature of the pipe, has a function of sensing the temperature of a long-distance pipe using the temperature sensor 210, for example, an optical fiber sensor, and of outputting position information and sensing information of the measurement point.

The temperature measuring device 200 may include a light source unit, a receiving unit, a signal processing unit, a temperature measurement unit, and a position measurement unit.

Since the speed of light within the optical fiber, which is the temperature sensor 210, is known, the location at which the scattered light is generated can be calculated by measuring the time it takes for the scattered light to return. Among the optical signals scattered and returned, there is Raman scattered light whose amplitude varies depending on temperature, and by measuring the ratio between the wavelength of the incident light and that of the scattered light, the absolute temperature of the optical fiber may be calculated. Rayleigh scattered light is 1/1000 of the incident light, and the Stokes light and the anti-Stokes light are each 1/1000 of the Rayleigh scattered light.

In the case of the temperature measuring device 200, the response distance is 1 meter or more, and therefore it may not be suitable for identifying the temperature of localized areas experiencing heat generation or temperature rise. However, this drawback in response distance may be compensated for by using an optical fiber that has been pre-formed into a coil shape. The heating cable 310 will be described below.

The heating cable 310 according to an embodiment of the present invention is a parallel-type heater in which a nichrome heating wire or spiral element is connected to a bus line in a zigzag manner at a certain section, forming a uniform heating section (e.g., 1 meter). Therefore, even if the cable is cut at any point, a consistent power output may be maintained within each section.

The heating cable 310 may include a thermal wire used for heating a long-distance pipe.

The heating cable controller 320 has a function of automatically controlling the turned-on and turned-off operations of the heating cable 310 based on temperature information of the fluid. The heat tracing monitoring device 100 may control the heating cable controller 320 by using a device such as a PLC device.

The heating cable 310 is standardized according to the use voltage and power, and may be manufactured to be compatible with various voltages and power levels by adjusting the resistance value.

In addition, the monitoring system 10 for heat tracing may include one or more sensors that perform different functions that are not illustrated in FIG. 1. These sensors may include a pressure sensor for measuring the pressure of the fluid inside the long-distance pipe, and an external temperature sensor for measuring the external temperature of the long-distance pipe, for example, the indoor and outdoor ambient temperatures where the long-distance pipe is installed, or the underground temperature where the long-distance pipe is buried.

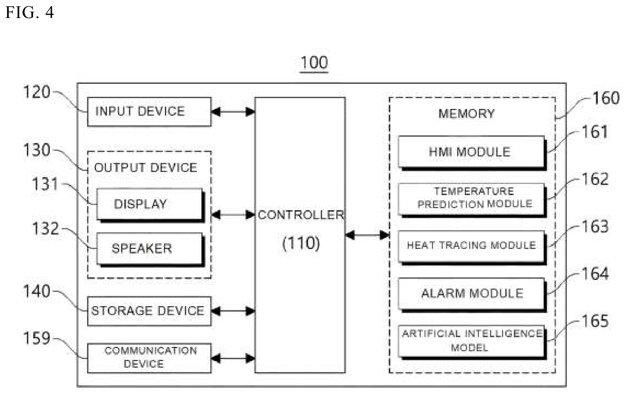

FIG. 4 is a block diagram of the heat tracing monitoring device included in the monitoring system shown in FIG. 3.

Referring to FIG. 4, the heat tracing monitoring device 100 according to an embodiment of the present invention may include a controller 110, the input device 120, the output device 130, a storage device 140, a communication device 150, and a memory 160.

The controller 110 may be implemented in the form of a processor and has a function of controlling the basic operations of the input device 120, the output device 130, the storage device 140, the communication device 150, and the memory 160. In addition, the controller 110 may control the operations of an HMI module 161, a temperature prediction module 162, a heat tracing module 163, an alarm module 164, and an artificial intelligence model 165, which may be implemented in hardware or software, in relation to the execution of the heat tracing monitoring method.

For example, the controller 110 may control the HMI module to display sensing information related to the fluid supplied through the pipe, such as, temperature values and the position information. That is, the controller 110 may control the HMI module 161 to display both the position information and the temperature value of the sensing point by using a virtual graphical model resembling the actual piping system.

The input device 120 may include a mouse, a keyboard, a touchscreen, and the like for receiving input from the user. The input device 120 may receive data necessary for configuring environment settings regarding the graphical model.

Referring to FIGS. 1 and 4, the heat tracing monitoring device 100 may include, as the input device 120, a mouse, a keyboard, and a touchscreen, and may include, as the output device 130, a display 131 and a speaker 132.

The display 131 has a function of visually displaying, in real time, the temperature value of the fluid flowing inside the pipe and the change in the temperature value by using a virtual graphical model that resembles the actual piping system, as well as visually indicating the risk level of a state change of the fluid.

The speaker 132 has a function of outputting, as sound, the risk level of a state change of the fluid inside the pipe.

The storage device 140 may store various types of information and data, fluid information such as fluid type, specific heat, specific gravity, and latent heat, pipe information such as material of the pipe, and environmental temperature information corresponding to the environment and season in which the pipe is installed, as well as phase equilibrium data of the fluid. In this case, the controller 110 may control the HMI module 161 to display the risk level of a phase change of the fluid in stages, based on the phase equilibrium data and the temperature value of the fluid.

The communication device 150 may receive the sensing information related to the pipe from at least one sensor installed on the pipe. In addition, the communication device 150 may be configured to receive position information regarding the temperature measurement point of the pipe and the temperature value of the pipe from the temperature measuring device 200. The communication device 150 may be configured to receive pressure information of the fluid inside the pipe from a pressure sensor installed on the pipe via the gas controller 400. The communication device 150 has a function of receiving a temperature value of the environment in which the pipe is installed from an external temperature sensor installed according to the exposure condition of the pipe.

The memory 160 may store, i.e., load, the HMI module 161, the temperature prediction module 162, the heat tracing module 163, the alarm module 164, and the artificial intelligence model 165, each implemented in the form of a program.

The HMI module 161 has a function of displaying the temperature value of the fluid by using a graphical model of a piping system provided with a plurality of long-distance pipes. The HMI module 161 may implement the graphical model of the virtual piping system that represents actual pipes through the editing functions of CAD.

The temperature prediction module 162 has a function of calibrating the temperature value of the pipe based on the temperature value of the pipe so that it more closely approximates the actual temperature value of the fluid. The rate at which heat generated from the heating cable 310 is transferred to the fluid through the pipe P may be affected by fluid information, pipe information, and environmental information.

That is, the difference between the temperature of the pipe and the temperature of the fluid may be greater in cases where, for example, the fluid has a large molecular weight and low convection velocity (as fluid information), the pipe has low thermal conductivity (as pipe information), or the pipe is installed in a cold environment such as outdoors during winter (as environmental information), compared to cases where the fluid has a small molecular weight, the pipe has high thermal conductivity, or the pipe is installed outdoors during summer. Here, the molecular weight of the fluid is also related to its specific heat, specific gravity, and latent heat.

The calibration between the temperature value of the pipe and the actual temperature value of the fluid may be performed based on thermodynamic equations and experiments conducted in accordance with those equations, by pre-collecting fluid information such as molecular weight of the fluid, pipe information related to the material of the pipe, and environmental temperature information corresponding to the season and the environment in which the pipe is installed. Furthermore, when using an artificial intelligence model, if the artificial intelligence model is trained using learning data that includes the temperature values of the pipe under different fluid information, pipe information, and environmental information, as well as the amount of electrical energy delivered to the pipe by the heating cable 310, the artificial intelligence model may predict a temperature value that approximates the actual temperature value of the fluid based on the temperature value of the pipe, according to the fluid information, pipe information, and environmental information, through learning.

The heat tracing module 163 has a function of operating the heat tracing device 300 to maintain the state of the fluid supplied through the pipe. The heat tracing module 163 may be configured to control the operation of the heating cable 310, which is independently installed according to the exposure condition of the pipe. For example, the pipe may be installed in an underground section, an indoor above-ground section, and an outdoor above-ground section.

The heating cable 310 may be individually installed in sections of the pipe where the temperature distribution is similar, such as the underground section, the indoor above-ground section, and the outdoor above-ground section. The controller 110 of the heat tracing monitoring device 100 may control the operation of the heat tracing device 300 through the heat tracing module 163. That is, the heating cable controller 320 may control the operation of the heating cable 310 in response to a command from the heat tracing monitoring device 100.

The heat tracing module 163 may be configured to control the operation of heaters that are installed separately according to the type of pipe, such as a pipe buried underground, a pipe exposed to air, a pipe installed indoors, and a pipe installed outdoors. In this case, the controller 110 controls the turned-on operation of the heater via the heat tracing module 163 based on the temperature change of the pipe, and it may also be configured to control the turned-off operation of the heater based on changes in the pressure of the substance inside the pipe, which is measured prior to changes in the pipe temperature.

The heat tracing module 163 may be configured to operate the heating cable 310 using the PLC.

The alarm module 164 has a function of notifying, through at least one of visual and auditory means, when the risk level of a phase change of the substance reaches a high level based on sensing information, such as temperature and pressure of the substance, and the phase equilibrium data of the substance. The substance inside the pipe, for example ammonia or carbon dioxide, exists in gaseous form at room temperature, but depending on its triple point distribution, if the temperature of the gas drops below the critical temperature under a certain pressure, sublimation or liquefaction occurs. In order to ensure the stable supply of gas, such phase change must be prevented in advance.

The artificial intelligence model 165 corresponds to a prediction model that has been trained through learning the relationship between external temperature and pipe temperature using previously collected big data. The controller 110 may be configured to predict the risk level of a phase change of the substance in advance, based on external temperature information of the pipe, by using the artificial intelligence model trained through learning with a dataset related to the correlation between external temperature and pipe temperature previously collected.

SCADA, or supervisory control and data acquisition, is a system for centralized monitoring or control of facilities located at remote distances. It is a system that enables rational operation of facilities and systems and efficient energy management by simplifying and automating various complex facilities and by effectively monitoring, controlling, measuring, analyzing, and processing these facilities and systems from a single location.

The HMI module 161 according to an embodiment of the present invention may include an HMI module used in a SCADA system. In this case, the monitoring system 10 for heat tracing may be included in the SCADA system or may be configured to interoperate with the SCADA system. Accordingly, a heat tracing monitoring method S100 and the monitoring system 10 for heat tracing may be configured to operate within the SCADA system, and to control the heating cable 310 based thereon.

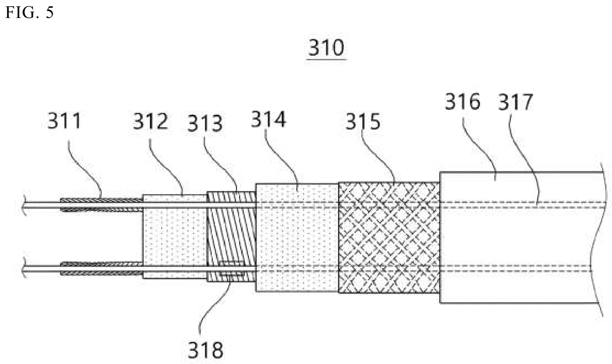

FIG. 5 is an exemplary diagram of a heating cable according to a first embodiment, included in the monitoring system shown in FIG. 1.

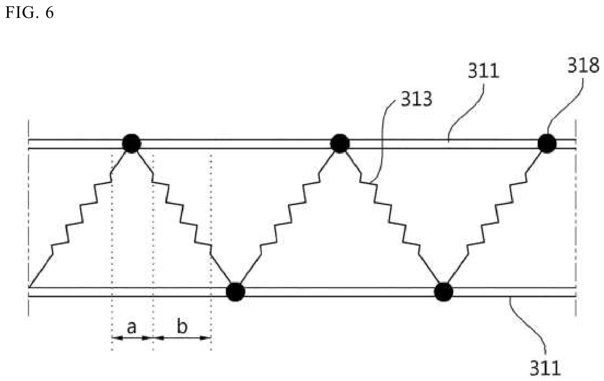

FIG. 6 is a circuit diagram of the heating cable shown in FIG. 3.

Referring to FIG. 5, the heating cable 310 may include a pair of bus lines 311, a primary insulating material 312, a heating wire 313, a secondary insulating material 314, a shielding shield 315, an outer sheath 316, and a connecting contact portion 318.

The heating cable 310 corresponds to a parallel-type electric heater that uses resistance. A terminal may be formed at one end of the pair of bus lines (copper bus lines) 311 and the terminal may be connected to a power terminal through a connector. The positive terminals at the other ends of the bus lines 311 form a closed circuit with each other. Either of the pair of bus lines may be grounded.

Two strands of bus lines 311 made of tin-plated copper wire (diameter 1.25 mm) are arranged in parallel. A resistive element made of a metal alloy, such as a nickel-chromium heating element, is wound helically around the primarily-insulated parallel bus lines 311 and comes into contact alternately with the parallel copper wires at regular intervals, for example, every 1 meter.

The heating cable 310 is a parallel-type heater in which a nickel-chromium heating wire is connected to the bus lines in a zigzag manner at a certain section, forming a uniform heating section (e.g., 1 meter). Even if any portion of the heating cable 310 is cut, a constant amount of power is consumed within each section. The heating cable 310 is standardized according to the use voltage and power. The heating cable 310 may be manufactured to be compatible with various voltages and power levels by adjusting the resistance value of the heating wire 313.

The heating wire 313 may be made of a nickel-chromium alloy and is characterized by excellent durability. The heating cable 310 includes a primary insulating material and a secondary insulating material 314 made of silicone rubber, which has excellent heat resistance, chemical resistance, oil resistance, flame retardancy, and electrical properties, thereby providing greater stability and flexibility compared to other heaters.

Referring to FIG. 6, the bus line 311 and the heating wire 313 are electrically connected at the connecting contact portion 318. Accordingly, the heating wire 313 alternately exhibits non-heating sections a and heating sections b.

Referring again to FIG. 5, the primary insulating material 312 may be made of silicone rubber or the like that insulates between the bus line 311 and the heating wire 323.

The heating wire 313 has a function of converting electrical energy supplied by the bus line 311 into thermal energy. The heating wire 313 may be implemented using a metal having high resistance or an alloy thereof, for example, an alloy such as copper-nickel, nickel-chromium, or iron-nickel.

The bus lines 311, for example, two strands of tin-plated copper wire with a diameter of 1.25 mm, are arranged in parallel, and a heating element corresponding to the heating wire 313, such as a nickel-chromium heating element, is helically wound around the primarily-insulated parallel conductors. The heating element comes into contact alternately with the two strands of the parallel bus lines 311 at regular intervals, for example, every 1 meter, thereby forming a heating circuit.

The heating wire 313 may be configured to form a helical shape on the primary insulating material 312 along the bus lines 311. The heating cable 310 may be configured with a different number of turns of the helix within a certain length depending on the heating capacity. Heating cables 310 with different heating capacities may be used for heat tracing of pipes installed in different environments.

Referring to FIG. 6, the heating cable 310 may include a connecting contact portion 318 at which the bus line 311 and the heating wire 313 are connected. The connecting contact portion 318 serves to electrically connect the heating wire 313 alternately to the pair of bus lines 311 at regular intervals. That is, a parallel circuit is created between the bus line 311 and the heating wire 313 at a regular interval by the connecting contact portion 318.

Referring again to FIG. 5, the secondary insulating material 314 insulates the connecting contact portion 318 and the bus lines 311 from the shielding shield 315.

The shielding shield 315 serves to shield noise introduced from the outside of the heating cable 310. The shielding shield 315 may be implemented in the form of a physically woven structure of actual metal wire.

The outer sheath 316 encloses the shielding shield 315. The outer sheath may be made of a PVC material or the like. A metal conduit may be added to wrap around the outer sheath 316. In this case, grounding of the metal conduit is required.

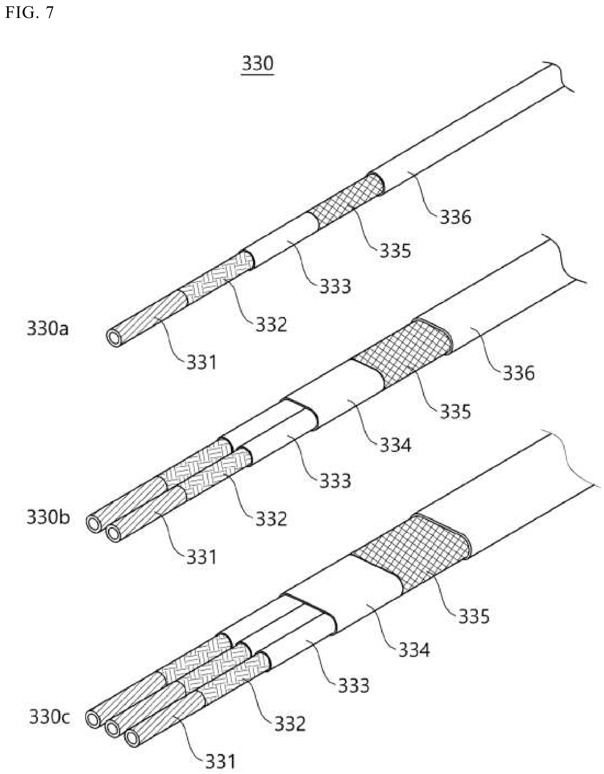

FIG. 7 is an exemplary diagram of a heating cable according to a second embodiment, included in the monitoring system shown in FIG. 1.

Referring to FIG. 7, the monitoring system 10 for heat tracing may include a series-type heating cable 330. The series-type heating cable 330 may be selected from among configurations that include a single copper wire, two copper wires, or three copper wires.

The heating cable 330 may include a nickel alloy copper wire 331, a glass fiber braid 332, an inner sheath 333, a tin-plated copper braid 335, and an outer sheath 336. Configurations including two copper wires 330b or three copper wires 330c may further include an intermediate sheath 334.

The nickel alloy copper wire 331 corresponds to a heating element. The nickel alloy copper wire 331 has a series configuration and may be composed of one to three pieces. The glass fiber braid 332 corresponds to a heat-resistant material. The inner sheath 333 may be formed of a fluororesin and corresponds to a primary insulator. The intermediate sheath 334 connects multiple pieces together and may be formed of fluororesin. The tin-plated copper braid 335 corresponds to a shielding material. The outer sheath 336 may be formed of fluororesin and corresponds to a secondary insulator.

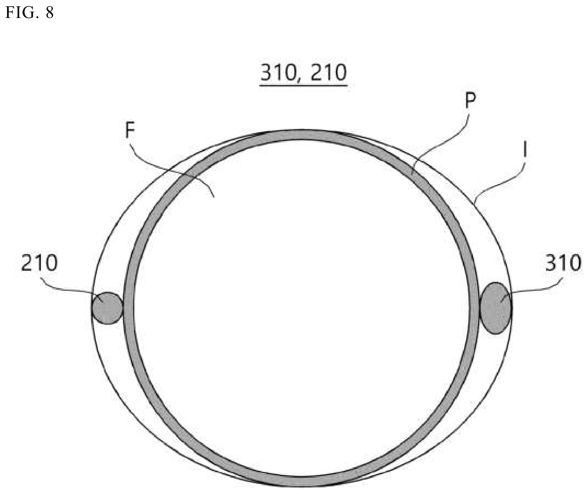

FIG. 8 is a cross-sectional view of a pipe where the temperature sensor and the heating cable, which are included in the monitoring system of FIG. 1, are installed.

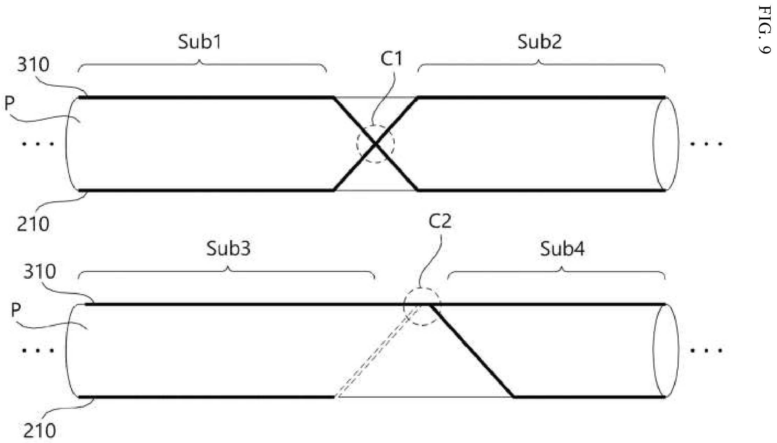

FIG. 9 is an exemplary diagram of the temperature sensor and the heating cable installed on the pipe shown in FIG. 8.

Referring to FIGS. 8 and 9, a heating cable 310 and a temperature sensor 210 according to an embodiment of the present invention may be installed in contact with the pipe P, with the pipe P and a thermal insulation 1 positioned between them. That is, the heating cable 310 may be installed in contact with the pipe P along the longitudinal direction of the pipe P. Likewise, the temperature sensor 210 may also be installed in contact with the pipe P along the longitudinal direction of the pipe P.

The thermal insulation 1 may prevent heat transferred to the pipe P by the heating cable 310 from escaping to the outside of the pipe, that is, to the atmosphere or underground environment in which the pipe is installed.

Referring to FIG. 9, the temperature sensor 210 and the heating cable 310 may be installed without contacting each other in sub-sections Sub1, Sub2, Sub3, and Sub4 of the entire section of the pipe. The temperature sensor 210 and the heating cable 310 may be installed to intersect each other at predetermined crossing points C1 and C2 between the sub-sections. The temperature sensor 210 and the heating cable 310 may be installed to be maximally spaced apart from each other within each sub-section.

The reason the temperature sensor 210 and the heating cable 310 are installed to be maximally spaced apart from each other is to equalize the amount of heat transfer in each direction (clockwise and counterclockwise) of heat conducted through the pipe P.

The reason the temperature sensor 210 and the heating cable 310 are installed not to intersect each other within the sub-sections but to intersect only at predetermined crossing points C1 and C2 is that, if the temperature sensor 210 is in contact with the heating cable 310 within the sub-sections, heat from the heating cable 310 may be directly transferred to the temperature sensor 210, making it difficult to accurately measure the temperature value of the pipe P.

As the temperature sensor 210 and the heating cable 310 intersect each other at the predetermined crossing points C1 and C2, it is possible to observe an immediate change in the temperature value of the pipe measured by the temperature sensor 210 in response to the temperature of the heating cable 310 at each of the crossing points C1 and C2. This enables determination of whether the heating cable 310 is operating normally, and allows comparison between the temperature values of the sub-sections and those at specific points.

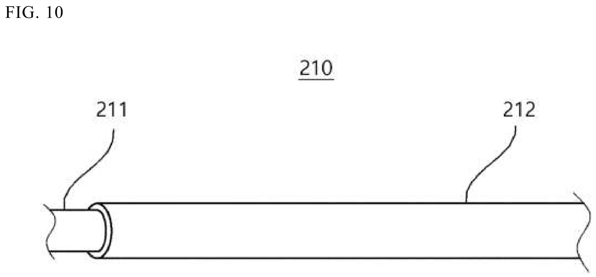

FIG. 10 is an exemplary diagram of a temperature sensor included in the monitoring system shown in FIG. 3.

Referring to FIG. 10, the temperature sensor 210 may be implemented in the form of an optical fiber sensor. The temperature sensor 210 may include an inner core 211 and an outer cladding 212. Since the core 211 of the temperature sensor 210 may be easily damaged on its own, a metal film, for example, a stainless steel cladding 212, may be applied to the core to prevent breakage.

The cladding 212 and the core 211 have different refractive indices, which determine the speed at which light propagates through the material. By minimizing the normal critical angle, total internal reflection can be maximized, allowing light to travel several kilometers with minimal attenuation.

According to the monitoring method S100 for heat tracing and the monitoring system 10 for heat tracing according to an embodiment of the present invention, the optical fiber sensor corresponding to the temperature sensor 210 having a temperature measurement function and the heating cable 310 are installed along the pipe, and the temperature distribution along the entire length of the pipe may be identified using the temperature measuring device 200, for example, a DTS, based on scattered light of Raman anti-Stokes light. Furthermore, a fluid temperature value approximating the actual fluid temperature may be calculated, thereby enabling temperature monitoring of equipment extending in the longitudinal direction of the pipe.

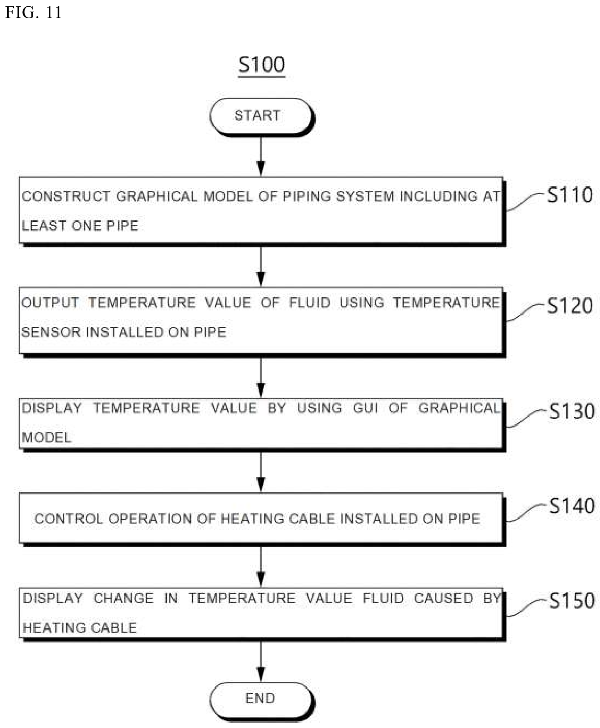

FIG. 11 is a flowchart illustrating a monitoring method for heat tracing according to an embodiment of the present invention.

Referring to FIG. 11, the monitoring method S100 for heat tracing according to an embodiment of the present invention may include: constructing a graphical model of a piping system (S110); measuring a temperature value of a fluid using a temperature sensor installed on the pipe (S120); and displaying the temperature value of the fluid using a GUI of the graphical model (S130). Additionally, the monitoring method may include controlling the operation of a heating cable 310 installed on the pipe (S140) and displaying the change in the temperature value of the fluid caused by the heating cable 310 (S150).

A heat tracing monitoring device 100 may construct a virtual graphical model of a long-distance pipe installed to supply gas, for example, a special gas, to a semiconductor manufacturing facility (S110).

A heat tracing monitoring device 100 may output a temperature value related to the fluid flowing through the long-distance pipe by using at least one temperature sensor 210 installed on the long-distance pipe (S120).

The heat tracing monitoring device 100 may display the temperature value of the fluid by using a GUI related to the virtual graphical model (S130). For example, the heat tracing monitoring device 100 may display both the position information of a sensing point, where sensing occurs in the long-distance pipe, and the temperature value of the fluid flowing through the long-distance pipe, by using the virtual graphical model through the control of a HMI module 161 (S130).

When heat generated by a heating wire 313 of the heating cable 310 reaches an outer sheath 316 of the heating cable 310, the heating cable 310 transfers the heat from the heat generation to the temperature sensor 210 through the pipe P. The temperature sensor 210 then measures the heat transmitted through the pipe P.

However, in the heat tracing of the pipe, it takes a certain amount of time for the temperature of the heating wire 313, transferred to the pipe P, to reach the fluid F inside the pipe P and raise the temperature of the fluid F. That is, there arises a difference between the temperature of the pipe P measured by the temperature sensor 210 and the actual temperature of the fluid currently inside the pipe P. Therefore, in order to obtain a temperature value closest to the actual temperature of the fluid F, the temperature value of the pipe measured by the temperature sensor 210 must be calibrated by an error temperature difference.

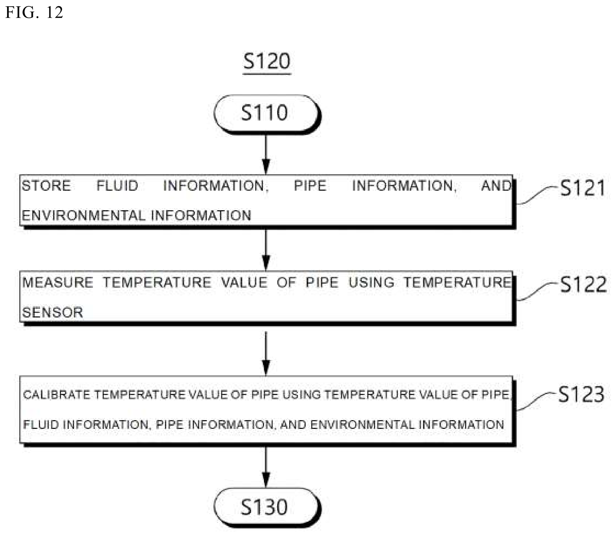

FIG. 12 is a flowchart of S120 in FIG. 11.

Referring to FIG. 12, the measuring of the temperature value of the fluid (S120) according to an embodiment of the present invention may include: storing fluid information, pipe information, and environmental information (S121); measuring the temperature value of the pipe using a temperature sensor (S122); and calibrating the temperature value of the pipe based on the temperature value of the pipe, the fluid information, the pipe information, and the environmental information (S123).

Referring again to FIG. 9, the temperature sensor 210 and the heating cable 310 according to an embodiment of the present invention may be installed spaced apart from each other, with the pipe P positioned between them. Therefore, the temperature value measured by the temperature measuring device 200 using the temperature sensor 210 corresponds to the temperature value of the pipe. In addition, the temperature value of the pipe may differ from the temperature value of the fluid flowing inside the pipe P. Therefore, in order to make the temperature value of the pipe approximate the actual temperature value of the fluid, calibrating of the pipe temperature value is required. Step S120, according to an embodiment of the present invention, describes the step of calibrating the pipe temperature value.

The heat emitted by the heating cable 310 may first be transferred to the pipe P that is in contact with the heating cable 310. The temperature measuring device 200 measures the heat transferred to the pipe. The heat transferred to the pipe P is then further transferred to the fluid F that is in direct contact with the pipe. In other words, the temperature value of the pipe and the temperature value of the fluid become inconsistent. This inconsistency is affected by the characteristics of the fluid F, the characteristics of the pipe, and the environment in which the pipe is installed.

Accordingly, in order to accurately measure the temperature value of the fluid F, it is necessary to calibrate the temperature value of the pipe according to the heat convection velocity of the fluid based on its molecular weight, the thermal conductivity of the pipe depending on its type, and the temperature of the environment in which the pipe is installed.

The fluid flowing inside the pipe P may exhibit different rates of heat diffusion depending on the magnitude of its molecular weight. For example, as the molecular weight of the fluid flowing inside the pipe P is smaller and the diffusion rate is higher, the difference between the temperature value of the pipe and the temperature value of the fluid may be reduced.

The pipe P may be manufactured using metal or synthetic resin such as PVC. Since the thermal conductivity of metal is higher than that of synthetic resin, the error between the temperature value of the pipe and the temperature value of the fluid may be reduced in a pipe made of metal as compared to a pipe made of synthetic resin.

As described above, the pipe P may be installed above ground or buried underground. The pipe P may be installed outdoors or indoors, even when above ground. The external temperature of a pipe P buried underground may not be significantly affected by the season, whereas the external temperature of a pipe P installed above ground outdoors may be greatly affected by atmospheric temperature depending on the season.

As such, if the fluid information including molecular weight of the fluid and the corresponding heat convection velocity, the pipe information regarding the material of the pipe, and the environmental information including the external temperature of the pipe based on installation environment of the pipe are known in advance, they may be used to calibrate the temperature value of the pipe to approximate the actual temperature value of the fluid. This calibration may be performed based on thermodynamic equations and experiments conducted in accordance with those equations.

As another embodiment for calibrating the temperature value of the pipe, the temperature value of the pipe may be calibrated using an artificial intelligence model.

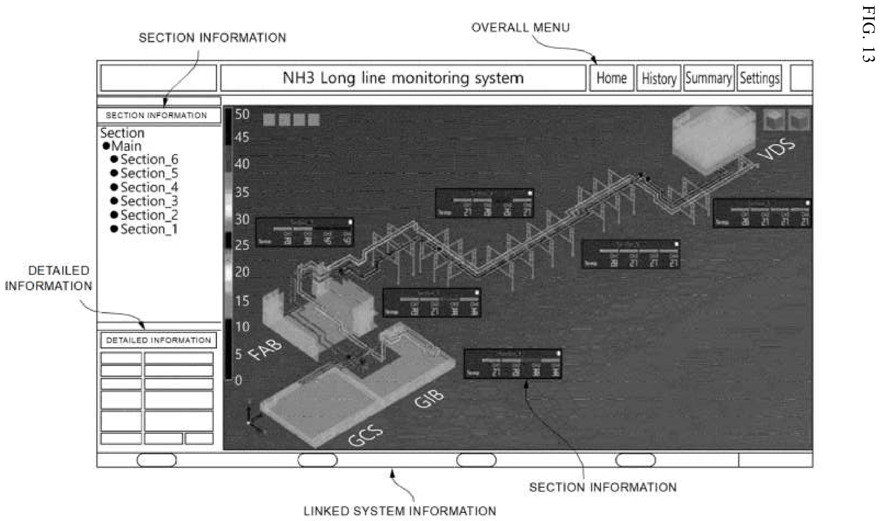

FIG. 13 is an exemplary diagram of a GUI of a pipe monitoring system according to an embodiment of the present invention.

Referring to FIG. 13, the overall GUI screen may be configured to include an overall menu, a section information item, a detailed information item, a linked system information item, and a section information item.

The overall menu may include sub-menus of Home, History related to monitoring information, Summary, and environmental Settings.

In the section information item, a section of the pipe may be selected, and the temperature information of the fluid and the position information of the sensing point for the selected section may be displayed in the detailed information item.

Referring again to FIG. 13, a virtual graphical model of a long-distance piping system for supplying gas to a semiconductor manufacturing process is illustrated. VDS stands for valve dispensing system and corresponds to a gas supply end. Gas supplied from the VDS is transported through a pipe, passing through FAB (fabrication), and continues to GIB (gas isolating box) or GCS (gas chemical system). The entire pipe, from supply to consumption, may be divided into a plurality of channels, for example, a first channel to a fourth channel, and a plurality of sections, for example, a first section to a sixth section. A single gas flows through one channel, and even if multiple channels carry the same gas, the temperature of the long-distance pipe may vary depending on the environment in which the section of the corresponding channel is located, such as aboveground/underground or indoors/outdoors.

A single channel may include: a pipe P through which gas flows; a temperature sensor 210 installed in contact with the pipe P for measuring the temperature of the pipe P; a heating cable 310 for heating the pipe P; and thermal insulation I that wraps the temperature sensor 210, the heating cable 310, and the pipe P together.

A single optical fiber sensor may be installed corresponding to one pipe and may form one channel. Since one channel consists of a plurality of sections, the temperature in each section may vary depending on the distance and the installation environment of the pipe.

A single channel may be assigned a plurality of independent heating cables for each section. For example, in the pipe of the first channel that carries CO₂ gas, the heating cables may be designed so that the first section to the sixth section are heated independently. Specifically, an additional heating cable 310 may be installed in the fourth section, which is located outdoors. Alternatively, for the fifth section, which is installed underground where temperature variation is minimal, a heating cable 310 that is independent from those in other sections may be used.

In the detailed information item, temperature information and position information for each channel may be displayed for the selected section.

In the linked system information item, items such as TEMPERATURE, SYSTEM, DTS, and SENSOR may be included, and relevant information may be displayed.

In the section information item, the name of the fluid and the temperature of the pipe through which the fluid flows may be displayed using different colors corresponding to each temperature range for each section. In this case, a risk level may be indicated for a section where a phase change of the fluid is a concern.

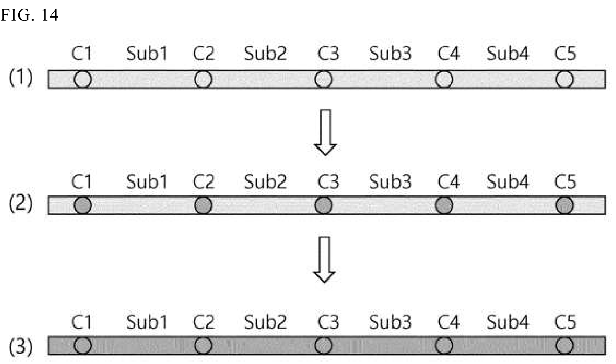

FIG. 14 is an exemplary diagram showing temperature changes at crossing points and sub-sections on a pipe where a temperature sensor and a heating cable are installed.

Referring to FIG. 14, changes in the temperature value of the heater, the temperature value of the pipe, or the temperature value of the fluid are illustrated in (1) to (3). In (1), the heating cable 310 does not generate heat, and the temperature value of the pipe or the temperature value of the fluid is lower than a threshold value. When the heating cable 310 begins heating the pipe, temperature changes first occur at crossing points C1 to C5 where the temperature sensor 210 and heating cable 310 intersect, and the temperature value at the crossing points exceeds the threshold value and changes before any change occurs in the sub-sections. However, in state (2), the temperatures of the pipe and fluid have still not exceeded the threshold value. After a certain amount of time has passed, at the point of (3), the heat emitted by the heating cable 310 is transferred through the pipe to the fluid, and the temperature values of both the pipe and the fluid exceed the threshold value, bringing the fluid to a stable state. In this way, by configuring the entire section of the pipe to include both sub-sections where the temperature sensor 210 and the heating cable 310 are arranged in parallel, and specific points where they intersect, the operational status of the heating cable 310 may be clearly determined, and the temperature value of the pipe and the temperature value of the fluid may be clearly identified and displayed.

According to an embodiment of the present invention, the temperature value of the pipe may be measured without error by using the temperature sensor installed separately from the heating cable.

In addition, temperature control of the fluid is possible using the heating cable installed separately from the optical fiber sensor.

Furthermore, monitoring of the fluid temperature value is possible based on the temperature value of the pipe measured using the optical fiber sensor.

Moreover, calibration of the temperature value of the pipe measured by the optical fiber sensor is possible using the specific heat, specific gravity, and latent heat of the fluid.

In addition, by using an optical fiber sensor and a heating cable that are installed separately on the pipe but intersect at certain points, it becomes to compare temperature values of the pipe measured in the separately installed sections and at the crossing points.

As described above, although exemplary embodiments of the present invention have been described, various embodiments disclosed in "Best Mode for Carrying out the Invention" are provided only for the illustrative purpose. Those skilled in the art can understand that various modifications, variations, and equivalents of the present invention are possible based on the above description.

In addition, since the present invention can be realized in various forms, the present invention is not limited to the above embodiments. The above description is provided only to allow those skilled in the art to completely comprehend the scope of the present invention, and it should be understood that the present invention is only defined by the accompanying claims.

### INDUSTRIAL APPLICABILITY

The present invention can be efficiently applied in the field of monitoring heat tracing

## Claims

1. A monitoring system for heat tracing, comprising:
a heat tracing monitoring device configured to receive a temperature value of a pipe from a temperature measuring device and to output a temperature value of a fluid flowing through the pipe by using the temperature value of the pipe through calibration;
the temperature measuring device configured to output and transmit the temperature value of the pipe by using a temperature sensor installed on the pipe that connects a fluid supply end, which supplies the fluid, and a fluid demand end, which uses the fluid; and
a heat tracing device provided with a heating cable installed on the pipe, and configured to heat the pipe using the heating cable,
wherein the heat tracing monitoring device is further configured to
control operation of the heat tracing device based on the temperature value of the fluid, and
to display the temperature value of the pipe, the temperature value of the fluid, and a change in the temperature value of the fluid heated by the heat tracing device by using a graphical model of a piping system including a plurality of pipes.

2. The monitoring system of claim 1, wherein the heat tracing monitoring device comprises
a human-machine interface (HMI) module configured to display the temperature value of the fluid and the change in the temperature value of the fluid caused by heating, by using the graphical model of the piping system including a plurality of pipes; and
a display configured to output the graphical model.

3. The monitoring system of claim 1, wherein the temperature sensor comprises an optical fiber sensor.

4. The monitoring system of claim 3, wherein the temperature measuring device is configured to output the temperature value of the pipe and position information regarding a temperature measuring point of the pipe using sensing information received from the optical fiber sensor.

5. The monitoring system of claim 3, wherein the optical fiber sensor is based on a Raman optical time-domain reflectometer (ROTDR) and configured to scatter incident laser light of a specific wavelength at predetermined positions and to output scattered light to be used for measuring the temperature and position of the pipe.

6. The monitoring system of claim 1, wherein the heating cable is installed in a sub-section within an entire section between the fluid supply end and the fluid demand end, parallel to the pipe in a longitudinal direction thereof, and in contact with the pipe.

7. The monitoring system of claim 6, wherein the temperature sensor is installed in the sub-section, parallel to the pipe in the longitudinal direction thereof and in contact with the pipe.

8. The monitoring system of claim 7, wherein the temperature sensor and the heating cable are installed to be maximally spaced apart from each other within the sub-section.

9. The monitoring system of claim 7, wherein the temperature sensor and the heating cable are installed to intersect each other at a predetermined crossing point between the sub-sections.

10. The monitoring system of claim 1, further comprising a programmable logic controller (PLC) connected to the heat tracing device,
wherein the heat tracing monitoring device is configured to control heating of the heating cable through the PLC.

11. A monitoring method for heat tracing, which is performed by a monitoring system for heat tracing, the monitoring method comprising:
constructing a graphical model of a piping system including at least one pipe;
outputting a temperature value of the pipe and a temperature value of a fluid flowing through the pipe using a temperature sensor installed on the pipe; and
displaying at least one of the temperature value of the pipe or the temperature value of the fluid using a graphical user interface (GUI) of the graphical model.

12. The monitoring method of claim 11, further comprising controlling operation of a heating cable installed in the pipe based on the temperature value of the fluid.

13. The monitoring method of claim 12, further comprising displaying in real time a change in the temperature value of the fluid heated by the heating cable.

14. The monitoring method of claim 11, wherein the outputting of the temperature value of the fluid flowing through the pipe comprises
pre-storing fluid information, piping information, and environmental information;
measuring a temperature value of the pipe using the temperature sensor; and
calibrating the temperature value of the pipe using the temperature value of the pipe, the fluid information, the piping information, and the environmental information.
